# EUROPEAN PATENT SPECIFICATION

(11) **EP 0 551 553 B1**
(45) Date of publication and mention of the grant of the patent: **18.11.1998**
(21) Application number: 92106644.5
(22) Date of filing: 16.04.1992
(51) Int. Cl.: A23J 1/12

(54) **Process for refining zein**
Verfahren zur Raffinierung von Zein
Procédé de raffinage du zéine

(30) Priority: 16.01.1992 JP 24387/92
(43) Date of publication of application: 21.07.1993
(73) Proprietor: Showa Sangyo Co., Ltd., Chiyoda-ku Tokyo (JP)
(72) Inventor: Takahashi, Hidekazu, c/o SHOWA SANGYO CO., LTD., Funabashi-shi, Chiba-ken (JP); Yanai, Norimasa, c/o SHOWA SANGYO CO., LTD., Funabashi-shi, Chiba-ken (JP)
(74) Representative: VOSSIUS & PARTNER

(56) References cited:
- DE-A- 2 002 377
- FR-A- 853 632
- US-A- 2 388 389
- US-A- 3 535 305

## Description

The present invention relates to a process for refining zein, and more particularly a process for treating a solution containing crude zein with an acetone solution to remarkably decrease inherent smell and color thereof.

Zein is main ingredient of corn proteins and dissolves in various alcohols and alkali solutions. The zein solution shows adhesiveness and has an ability to form films and fibers. For instance, when the zein solution is applied by spraying or dipping on a surface of an object and dried, a film is formed thereon, which is excellent in quality of resisting to water, acid and heat as well as in electric insulation ability. Therefore, zein has widely been employed as a raw material e.g. for preparing waterproof stuff for papers, paint for wood works, adhesive for plywoods, damp-proofing agent and coating agent for foods and tablets (medicine).

Various processes have been proposed for extracting and refining zein. In JP-A-167700/1986 and Martinue Nijhoff et al "Seed Proteins Biochemistry, Genetics, Nutritive Value", page 275 - 285 (1983), there are described extraction processes, where in corn gluten meal containing zein is treated with 70 - 90% (V/V) ethyl alcohol, about 90% (V/V) isopropyl alcohol or a similar water-containing lower alcohol solution, and then the alcohol is distilled off to obtain the zein. In JP-B-16800/1975 there is described a process, wherein the zein is extracted from wheat gluten with 60 - 95% (V/V) aqueous acetone, methylethylketone or diethyleneglycol solution under stirring at a temperature of 50 - 70°C

The zein obtained by the above conventional processes has an inherent smell and color and thus can not sufficiently satisfy recent severe requirements in food, medicine preparation and other industries. Further, it is difficult to stably supply the zein product with nice quality, since a remarkable fluctuation in quality will occur due to differences in the raw materials to be used, when such a conventional process is applied for.

As processes for purifying the zein, there are those, wherein the zein containing alcohol or alkali solution is cooled to cause precipitation of the zein component and the resulting block-like precipitate is dried ["Industrial and Engineering Chemistry", Vol. 33, No.3, page 394 (1941)], and wherein the zein solution is poured into water or a salt solution, for instance sodium chloride solution to cause precipitation of the zein and the resulting precipitate is dried to obtain the zein product which has good solubility in ethyl alcohol [JP-A-185999 (1988)].

The former process has the disadvantages that the block-like precipitate is difficult to wash since the solution should be kept at a temperature of -20°C or below to avoid denaturation of the zein due to water contained therein. The severe cooling condition and subsequent drying increase the costs. While, the latter refining process has also disadvantages in that the color and smell can not sufficiently be removed, cooling reservation of the precipitate is required to avoid denaturation and freeze-drying of the precipitate results in an increase of costs.

DE-A-2 002 377 and US-A-3,535,305 relate to the production of zein by extracting grain gluten with a concentrated aqueous alcohol solution or the like, separating gluten solids from the resulting extract, precipitating a taffy-like zein-alcohol phase from the extract by cooling it, decanting supernatant solvent from the zein-alcohol phase, and recovering the zein product from the latter. Repetition of the extraction, cooling and decanting cycles results in an increasingly pure zein product.

In view of such technical state of the art, the present inventors have proposed in Japanese Patent Application No. Hei 3 (1991) - 117893 (corresponding to copending European Patent Application Nr. 92 10 66 43.7) a process for treating zein containing material to decrease the smell and color, by combining an extraction of zein component with an alcohol, and more particularly ethyl alcohol with purification or washing of the zein component with an acetone solution.

However, the zein treated with the last-mentioned process is not yet perfect in smell and color, and may suffer some denaturation thereof during its drying step and reservation period of time.

Therefore, an object of the present invention is to provide a process for refining zein, which satisfies following requirements:
i) Providing an excellent product which has almost no smell, and a color tone of near white;
ii) Improving solubility in solvents like alcohols;
iii) Providing a dried product which can easily be pulverized into a powder; and
iv) Suppressing of denaturation of the product.

According to the invention, the object can be attained by a process for refining zein, which comprises the steps of dispersing a solution containing crude zein having a viscosity less than 100,000cps into absolute acetone or an aqueous acetone solution with an acetone concentration near the absolute acetone to cause precipitation of the zein component, as a porous solid , and separating and drying the solid.

In this specification, the term "solution containing crude zein" means the followings.
a) A solution prepared by dissolving crude zein in a solvent selected from a monohydric alcohol having 1 - 4 carbon atoms, propylene glycol, ethylene glycol, aqueous acetone solution, an alkali solution, or any mixture thereof, and
b) A solution obtained, when zein is extracted from a raw material like pulverized corn, pulverized wheat and gluten meal.

To obtain desirable products, the viscosity of the solution containing the crude zein is less than 100000cps. The term "acetone solution of high purity" means absolute acetone or an aqueous acetone solution with acetone concentration near the absolute acetone.

The dispersion of crude zein containing solution in the high purity acetone solution can be carried out by a method known per se, for instance jetting the crude zein containing solution into the acetone solution through a nozzle; adding dropwise or threadwise the crude zein containing solution into the acetone solution; gradually pouring the crude zein containing solution into the acetone solution, while agitating the latter; spraying the crude zein containing solution to the acetone solution; or any combination of the above.

The ratio between the amount of crude zein containing solution and acetone solution depends on the moisture or water content of the former solution. When the dispersion is to be carried out at room temperature, it is necessary to adjust the amount of the crude zein containing solution to be added in such a way that the moisture content in the acetone solution, wherein the crude zein containing solution has been dispersed does not exceed 2 - 3%, since if the dispersion contains more moisture than the above, the zein component precipitates in a nougat state rendering the subsequent operations difficult. However, the crude zein containing solution can be added in higher amounts, when a cooled acetone solution is employed.

The solids which can be obtained by carrying out the process of the present invention will have various shapes, e.g. the shape of blocks, threads, needles, flakes, grains or powders depending on the method selected for dispersing the crude zein containing solution in the acetone solution, but all forms will be porous, so that they can sufficiently be washed with the acetone solution, rapidly decrease in smell and color, and can easily be crushed.

According to the invention, the solids of zein component are formed in the acetone solution containing almost no water, so that the subsequent separation and drying steps can easily be carried out without requiring freeze-drying.

The invention will now be further explained in more detail with reference to Examples, comparative Examples and Comparative Test Example.

### Example 1

To 50g of corn gluten meal were added 250ml of 70% (V/V) acetone solution under stirring at 40°C for 4 hours. After separation of the solids, the filtrate was heated for distilling out to recover about half amount of the acetone and to recover a precipitate of zein component. The weight of this nougat-like precipitate was 32g, wherein the solid content was 12.3g. To the precipitate were added 35ml of absolute acetone to obtain a honey-like viscous solution. The solution was added dropwise to 300ml of absolute acetone kept at 7°C and agitated to form precipitates of zein component therein. The acetone solution containing the precipitates was stirred for 1 hour and filtered and dried in vacuo to recover 10.2g of white porous zein of rice grain size.

### Example 2

50g of 78.5% (V/V) acetone solution containing 20g of crude zein were poured into 500ml of absolute acetone which was charged and agitated in a homogenizer rotated at 10000rpm to continue the agitation for 2 minutes. Resulting solids were separated through filtration and dried in vacuo to obtain 17.5g of zein as white powder.

### Example 3

60g of 90% (V/V) aqueous ethyl alcohol solution containing 20g of crude zein were added dropwise into 400ml of absolute acetone solution which was kept at -10°C and agitated, to continue the agitation for 1 hour. Resulting solids were separated through filtration and dried in vacuo to obtain 9.7g of porous zein of rice grain size.

### Example 4

To 20 litres of absolute acetone was added a 79.2% (V/V) acetone solution containing 1kg of crude zein by an air spray for painting under a pressure of 2kg/cm² and dipping a nozzle thereof into the absolute acetone to form a cloud-like precipitate. Then the solution was left to stand for 20 minutes. Resulting solids were separated with a filter of 150 mesh, washed with 1 litre of absolute acetone and dried in vacuo to obtain 901g of zein in powder form.

### Comparative Example 1

To 50g of corn gluten meal were added 250ml of 70% (V/V) acetone solution to stir at room temperature for 4 hours. After separation of solids, a filtrate containing 16g of zein was heated for distilling out to recover the acetone and to obtain a precipitate of zein component. The weight of this nougat-like precipitate was 33g, wherein the solid content was 12.5g. The precipitate of nougat-like material having a viscosity of more than 100000cps was added into 300ml of absolute acetone which is kept at 7°C and agitated to form a milky precipitate of zein component therein. The acetone solution containing the precipitate was stirred for 1 hour and filtered, and then dried in vacuo to recover 10.9g of zein of rice grain size.

### Comparative Example 2

20g of dried crude zein (semitransparent particles of about 0.5 - 1mm) were added into 500ml of 98% (V/V) acetone solution which was charged and agitated by a homogenizer rotated at 10000rpm to continue the agitation for 2 minutes. Resulting solids were separated through filtration, dried in vacuo, and washed with 20ml of absolute acetone solution to obtain 16.9g of zein as white powder.

### Comparative Test Example

The intensity of color on the solution (Initial solution) containing crude zein or crude zein extract from corn gluten meal as well as a solution (Final solution) of the final zein product obtained by the Examples and Comparative Examples was checked with a spectrophotometer at 470nm, which solution was prepared by dissolving the product in 80% (V/V) aqueous ethyl alcohol to make its solid content of 3% (W/V).

Results are shown in following Table 1.

**Table 1**

| | Initial solution (%) | Final solution (%) |
|---|---|---|
| Example | | |
| 1 | 56.3 | 80.8 |
| 2 | 54.1 | 85.7 |
| 3 | 54.1 | 83.1 |
| 4 | 59.3 | 84.1 |

| Comparative Example | | |
|---|---|---|
| 1 | 54.9 | 71.6 |
| 2 | 54.1 | 79.4 |

## Claims

1. A process for refining zein, which comprises the steps of dispersing a solution containing crude zein having a viscosity less than 100,000cps into absolute acetone or an aqueous acetone solution with an acetone concentration near the absolute acetone to cause precipitation of the zein component as porous solid , and separating and drying the solid.

2. A process as claimed in Claim 1, wherein said solution containing crude zein is a solution of the crude zein in a solvent selected from the group consisting of a monohydric alcohol having 1 - 4 carbon atoms, ethylene glycol, propylene glycol, aqueous acetone solution, alkali solution, and mixed solution thereof.

3. A process as claimed in Claim 1, wherein said solution containing crude zein is a solution extracted from a material selected from the group consisting of pulverised corn, pulverized wheat, and gluten meal thereof.

## Patentansprüche

1. Verfahren zur Raffinierung von Zein, das die Schritte des Dispergierens einer rohes Zein enthaltenden Lösung mit einer Viskosität von weniger als 100000 cps in absolutem Aceton oder in einer wäßrigen Acetonlösung mit einer Acetonkonzentration nahe absolutem Aceton zum Ausfällen des Zeinbestandteils als porösen Feststoff und Abtrennen und Trocknen des Feststoffs umfaßt.

2. Verfahren nach Anspruch 1, wobei die rohes Zein enthaltende Lösung eine Lösung des rohen Zeins in einem Lösungsmittel, ausgewählt aus einem einwertigen Alkohol mit 1 - 4 Kohlenstoffatomen, Ethylenglycol, Propylenglycol, wäßriger Acetonlösung, Basenlösung und gemischter Lösung davon, ist.

3. Verfahren nach Anspruch 1, wobei die rohes Zein enthaltende Lösung eine aus einem Material extrahierte Lösung ist, das aus pulverisiertem Mais, pulverisiertem Weizen und Klebermehl davon ausgewählt ist.

## Revendications

1. Procédé de raffinage de zéine, qui comprend les étapes de dispersion d'une solution contenant de la zéine brute ayant une viscosité inférieure à 100 000 cps dans de l'acétone absolue ou une solution d'acétone aqueuse avec une concentration d'acétone proche de l'acétone absolue pour provoquer la précipitation du composant zéine sous forme d'un solide poreux, et la séparation et le séchage du solide.

2. Procédé selon la revendication 1, caractérisée en ce que ladite solution contenant la zéine brute est une solution de zéine brute dans un solvant choisi dans le groupe constitué par un alcool monohydrique ayant de 1 à 4 atomes de carbone, l'éthylèneglycol, le propylèneglycol, une solution d'acétone aqueuse, une solution alcaline, et une solution mixte de ceux-ci.

3. Procédé selon la revendication 1, caractérisé en ce que ladite solution contenant la zéine brute est une solution extraite à partir d'un matériau choisi dans le groupe constitué par le mais pulvérisé, le blé pulvérisé et une farine de gluten de ceux-ci.
